Europäisches Patentamt

European Patent Office

Office européen des brevets

(19)

(11) EP 1 629 978 A2

(12) **EUROPEAN PATENT APPLICATION**

(43) Date of publication:
01.03.2006 Bulletin 2006/09

(51) Int Cl.:
*B41F 31/04* (2006.01)   *B41F 33/00* (2006.01)

(21) Application number: 05018776.4

(22) Date of filing: 30.08.2005

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 31.08.2004 JP 2004252715

(71) Applicant: MITSUBISHI HEAVY INDUSTRIES, LTD.
Tokyo 108-8215 (JP)

(72) Inventors:
• Ozaki, Ikuo
Mitsubishi Heavy Industries, Ltd.
Nishi-ku
Hiroshima
Hiroshima-ken733-8553 (JP)
• Takemoto, Syuuichi,
Mitsubishi Heavy Ind. Ltd
Mihara
Hiroshima-ken 729-0393 (JP)
• Tasaka, Norifumi
Mitsubishi Heavy Ind. Ltd
Mihara
Hiroshima-ken 729-0393 (JP)

(74) Representative: HOFFMANN EITLE
Patent- und Rechtsanwälte
Arabellastrasse 4
81925 München (DE)

(54) **Picture color tone controlling method and apparatus**

(57) A picture color tone controlling method and apparatus for a printing press is disclosed which can readily and rapidly eliminate a positional displacement between a plate making image and an actual machine image and can appropriately perform color tone control in which an IRGB densitometer is used. A plate making picture position obtained from plate making data is moved so that a positional displacement between the plate making picture position and an actual picture position obtained from a result of actual printing. A target color mixture halftone density for each ink supplying unit width when a printing picture is divided with an ink supplying unit width of an ink supplying apparatus (6, 7) is set. An IRGB densitometer (1) is used to measure the actual color mixture halftone density for each ink supplying unit width of an actually printed sheet obtained by printing. The color mixture halftone densities are individually converted into halftone dot area ratios and further into monochromatic halftone densities. Then, the Yule-Nielsen expression or the like is used to determine a solid density deviation corresponding to a deviation between the target monochromatic halftone density and the actual monochromatic halftone density, and the ink supplying amount is adjusted for each ink supplying unit width in response to the solid density deviation.

FIG. 2

EP 1 629 978 A2

**Description**

BACKGROUND OF THE INVENTION

1) Field of the Invention

This invention relates to a picture color tone controlling method and apparatus for a printing press, and more particularly to a picture color tone controlling method and apparatus for controlling the color tone using an IRGB densitometer.

2) Description of the Related Art

Various techniques have been proposed as a technique for color tone control of a picture of a printing press.

For example, in techniques disclosed in Japanese Patent Laid-Open No. 2001-18364 (hereinafter referred to as Patent Document 1) and Japanese Patent Laid-Open No. 2001-47605 (hereinafter referred to as Patent Document 2), color tone control is performed in such a procedure as described below.

First, a spectral reflectance of a picture printed by printing units of different colors is measured by a spectrometer. Then, the spectral reflectance (average spectral reflectance in an overall key zone) is calculated for each of key zones of ink keys, and the spectral reflectance of each key zone is converted into a color coordinate value (L*a*b*) proposed by the International Commission on Illumination. If the ink supplying amount for each color is adjusted and test printing is performed and then a printing sheet (hereinafter referred to as OK sheet) having a desired color tone is obtained, then the color coordinate value for each key zone of the OK sheet is set as a target color coordinate value. Then, actual printing is started, and the difference (color difference) between the color coordinate values of the OK sheet and a printing sheet (printing sheet obtained by actual printing is hereinafter referred to as actual printing sheet) is calculated for each of the key zones. Thereafter, an increasing and decreasing amount for the opening of the ink key of each printing unit with respect to the color difference is calculated, and the opening of each ink key of each printing unit is adjusted by online control so that the color difference may be reduced to zero.

However, according to the techniques disclosed in Patent Documents 1 and 2, a spectrometer is used as a measurement section. The spectrometer requires a high cost. Further, where an object of measurement (in this instance, a printing sheet) moves at a very high speed as in the case of a rotary press for newspapers, the spectrometer cannot follow up the measurement object because of the processing capacity thereof. Further, in the method described above, since the color tone control is started after an OK sheet is printed, a great amount of paper loss appears after the printing process is started until the OK sheet is printed. Further, in the method described above, a picture in the key zone of each ink key is averaged over the entire key zone and the color tone control is performed based on the spectral reflectance after the averaging. Therefore, where the image line ratio of the picture in a key zone is low, a measurement error of the spectrometer increases and the control is likely to be rendered instable. Further, particularly severe color tone management is sometimes requested regarding a specific noticed point in a picture depending upon an order from a customer. Where the color tone control is to be performed for a specific noticed point in such a manner as just described, data such as CIP3 data [PPF (Print Production Format) data conforming to the standard of CIP3 (Cooperation for Integration of Prepress, Press, Postpress)] must be received as image data to be used as a reference from an upstream plate making step.

Japanese Patent Laid-Open No. 2004-106523 (hereinafter referred to as Patent Document 3) discloses a technique wherein, in order to solve such subjects as described above, color tone control is performed in accordance with the following procedure.

First, a target color mixture halftone density for each ink supplying unit width when a printing picture is divided by the ink supplying unit width of an ink supplying apparatus is set. It is to be noted that, where the ink supplying apparatus is an ink key apparatus, the ink supplying unit width of the ink supplying apparatus is the key width (key zone) of each ink key, but where the ink supplying apparatus is a digital pump apparatus, the ink supplying unit width is the pump width of each digital pump. It is to be noted that a setting method for the target color mixture halftone density is hereinafter described.

If printing is started and an actual printing sheet is obtained, then an actual color mixture halftone density for each ink supplying unit width of the actual printing sheet is measured using an IRGB densitometer. Then, an actual halftone dot area ratio for each ink color corresponding to the actual color mixture halftone density is calculated based on a corresponding relationship set in advance between halftone dot area ratios and color mixture halftone densities for the individual ink colors. As a method for calculating an actual halftone dot area ratio from an actual color mixture halftone density, a database wherein a relationship between halftone dot area ratios and color mixture halftone densities for individual ink colors is stored, for example, a database wherein data obtained by actual measurement, by means of an IRGB densitometer, of a printed matter printed in accordance with the JapanColor standards for Newspaper Printing established by the ISO/TC130 National Commission are stored, may be used. More simply, the database can be utilized also to utilize an approximate value calculated using the known Neugebauer expression. Further, a target halftone dot area ratio for each ink color corresponding to the target color mixture halftone density is calculated based on the corresponding relationship described above between halftone dot area ratios and color mixture halftone densities. Different from the actual halftone dot area ratio, the target halftone dot area ratio need not be calculated every time, but it is sufficient to calculate the target halftone dot area ratio once unless the target color mixture halftone density varies. For example, the target halftone dot area ratio may be calculated at a point of time when the target color mixture halftone density is set.

Then, an actual monochromatic halftone density corresponding to the actual halftone dot area ratio is calculated based on a corresponding relationship set in advance between halftone dot area ratios and monochromatic halftone densities. As a method of calculating an actual monochromatic halftone density from an actual halftone dot area ratio, a map or a table which represents a relationship between monochromatic halftone densities and halftone dot area ratios is prepared, and then the actual halftone dot area ratio is applied to the map or the table. Meanwhile, a target monochromatic halftone density corresponding to the target halftone dot area ratio is calculated based on the corresponding relationship described above between halftone dot area ratios and monochromatic halftone densities. Different from the actual monochromatic halftone density, the target monochromatic halftone density need not be calculated every time, and it is sufficient to calculate the target monochromatic halftone density once unless the target halftone dot area ratio varies. For example, the target monochromatic halftone density may be calculated at a point of time when the target halftone dot area ratio is set.

Then, a solid density deviation corresponding to a deviation between the target monochromatic halftone density and the actual monochromatic halftone density under the target halftone dot area ratio is calculated based on a corresponding relationship set in advance among halftone dot area ratios, monochromatic halftone densities and solid densities. As a method of calculating the solid density difference, a map or a table which represents the corresponding relationship described above is prepared, and then the target halftone dot area ratio, target monochromatic halftone density and actual monochromatic halftone density are applied to the map or table. More simply, the relationship described above may be approximated using the known Yule-Nielsen expression to calculate the solid density deviation. Then, the ink supplying amount is adjusted for each of the ink supplying unit widths based on the calculated solid density deviation and the ink supplying amount for each color is controlled for each of the ink supplying unit widths. The adjustment amount of the ink supplying amount based on the solid density deviation can be determined simply using the known API (Auto Preset Inking) function which is hereinafter described in detail in connection with the preferred embodiments of the present invention.

According to such a picture color tone controlling method as described above, since color tone control can be performed using not a spectrometer but an IRGB densitometer, the cost required for the measuring system can be reduced, and besides the picture color tone controlling method can be applied sufficiently also to a high speed printing press such as a rotary press for newspapers.

Meanwhile, as a technique for setting a target color mixture halftone density where kcmy halftone dot area ratio data of a printing object picture (for example, image data for plate making or the like) can be acquired from the outside (for example, a printing requesting source or the like), the following technique has been proposed.

First, the acquired image data (kcmy halftone dot area ratio data) are used to set a noticed pixel (a noticed pixel may be a single pixel or a plurality of contiguous pixels in a mass) corresponding to each of ink colors for each ink supplying unit width from among pixels which form the printing object picture. Then, the halftone dot area ratio of the noticed pixel is converted into a color mixture halftone density based on a corresponding relationship set in advance between halftone dot area ratios and color mixture halftone densities. Then, the color mixture halftone density of the noticed pixel is set as a target color mixture halftone density, and the actual color mixture halftone density of the set noticed pixel is measured.

According to the proposed technique, since color development can be estimated in a unit of a pixel by utilizing the database of JapanColor or the like, color tone control can be performed for a particular noticed point of the picture at a point of time immediately after printing is started without waiting that an OK sheet is printed. It is to be noted that the kcmy halftone dot area ratio data may be bitmap data of the printing obj ect picture (for example, data for 1 bit-Tiff plating making) . Or, low resolution data corresponding to CIP3 data obtained by conversion of such bitmap data maybe used alternatively.

Incidentally, where plate making data (image data for plate making) are used such that the color mixture halftone density of a particular noticed pixel of a printing image (plate making image) obtained from the plate making data is set as a target color mixture halftone density and an actual color mixture halftone density of the set noticedpixel is measured on a printed image (actual machine image) of a result of actual printing based on the setting and then picture color tone control is performed based on the target color mixture halftone density and the actual colormixture halftone density as in the technique of Patent Document 3 described hereinabove, it is a precondition that no positional displacement occurs between the plate making image and the actual machine image.

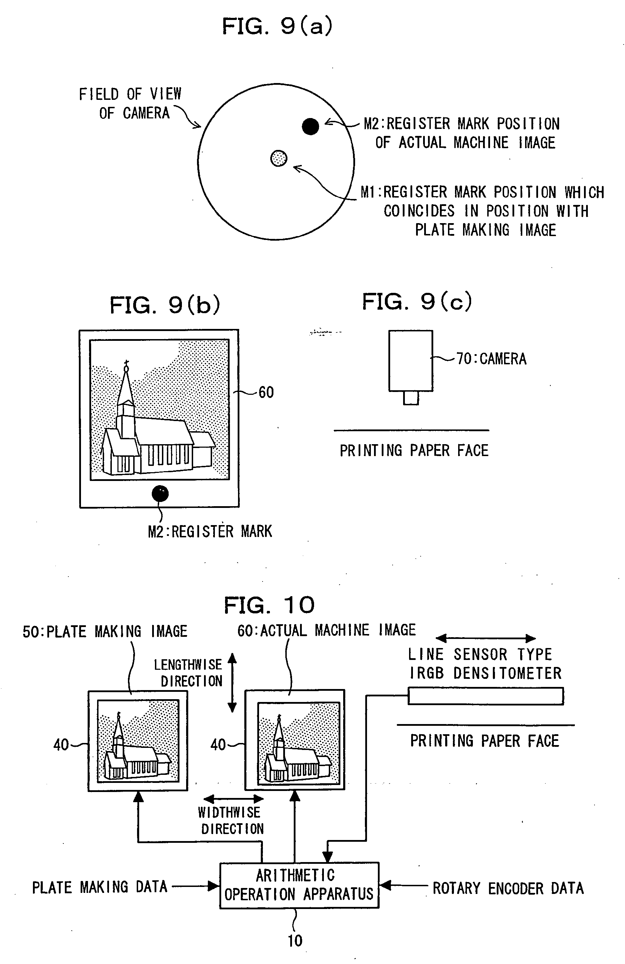

However, where attention is paid to the position of a printing picture with respect to printing paper, a positional displacement upon manufacture or upon assembly of a printing plate or the like sometimes causes a positional displacement of an actual machine image 60 to appear in a widthwise direction or a lengthwise direction of the printing paper (web) with respect to a plate making image 50 obtained from plate making data as seen in FIG. 10.

If such a positional displacement as described above appears, then since a noticed pixel on the plate making image and a noticed pixel on the actual machine image become different from each other, picture color tone control cannot be performed appropriately.

It is a possible idea to take the following countermeasure to cope with the problem just described.

In particular, for example, as seen in FIG. 10, plate making data are inputted to an arithmetic operation apparatus 10, and a plate making image 50 based on the plate making data is outputted from the arithmetic operation apparatus 10 to a printing area monitor 40. Meanwhile, a printing paper surface actually printed is sensed by a densitometer (for example, a line sensor type IRGB densitometer) 1 used in the technique of Patent Document 3, and the sensing data are inputted to the arithmetic operation apparatus 10 such that an actual machine image 60 based on the sensing data is outputted from the arithmetic operation apparatus 10 to the printing area monitor 40. Then, while the printing area monitor 40 is visually observed, the operator would move the densitometer 1 in the axial direction and displace, in a lengthwise direction, the pulse timing of a rotary encoder, which is provided to make the detection signal of the densitometer 1 and the lengthwise position of the printing paper surface correspond to each other, so that the actual machine image 60 may come to the position of the plate making image 50.

This can eliminate the positional displacement between the plate making image and the actual machine image. However, if the movement of the densitometer 1 or the adjustment of the pulse timing of the rotary encoder is performed by manual operation, then it is difficult to eliminate the positional displacement with a high degree of accuracy.

If the densitometer 1 is moved, then a displacement appears with regard to the sensor point position of the densitometer 1 with respect to the paper surface, and it is very difficult to adjust the position of the densitometer 1 while the focal length of the sensor or the angle of measurement with respect to the paper surface is maintained fixed.

Further, if it is tried to perform the adjustment with a high degree of accuracy, then much time is required and paper loss before the control is started increases.

Furthermore, even if positioning can be performed appropriately upon starting of the control, during operation, a positional displacement sometimes occurs because of a variation of the tension of the printing paper or because of appearance of meandering on the printing paper as time passes. However, it is difficult to cope with the positional displacement just described.


SUMMARY OF THE INVENTION

It is an object of the present invention to provide a picture color tone controlling method and apparatus for a printing press which can readily and rapidly eliminate a positional displacement between a plate making image and an actual machine image and also a positional displacement which appears as time passes and can appropriately perform color tone control in which an IRGB densitometer which requires a lower cost than a spectrometer is used.

In order to attain the object described above, in a picture color tone controlling method for a printing press according to the present invention, a positional displacement between a plate making picture position which is a position of a printing picture with respect to printing paper and is obtained from plate making data and an actual picture position which is a position of a printing picture with respect to the printing paper obtained by detecting actual printing paper printed based on the plate making data by means of a sensor is detected first. The detection of the actual picture position is performed after printing is actually performed to obtain an actually printed matter. Further, the positional displacement is a displacement in a widthwise direction and a lengthwise direction of the printing paper.

Then, the plate making picture position is moved so as to eliminate the detected positional displacement. The data format of the plate making data generally is bitmap data of the printing object picture (for example, 1 bit-Tiff plate making data) or CIP3 data corresponding to 50.8 dpi or equivalent resolution conversion data (data obtained by conversion of 1 bit-Tiff plate making data of 1,200 dpi or 2, 400 dpi into 8 bit-Tiff data of 50 dpi) . In order to move the plate making picture position, the positions of the pixels of bitmap data should be moved by an equal amount in the widthwise direction or the lengthwise direction, and this is simple arithmetic operation and can be processed rapidly by a computer. Besides, the plate making data have a high resolution, and consequently, the moving process can be performed appropriately with a high degree of accuracy.

After the process for positional displacement elimination is performed in this manner, a target color mixture halftone density for each of ink supplying unit widths of an ink supplying apparatus when the printing picture is divided with the ink supplying unit width is set based on the information of the moved plate making picture. The ink supplying unit width of the ink supplying apparatus is, where the ink supplying apparatus is an ink key apparatus, the key width (key zone) of each ink key, but is, where the ink supplying apparatus is a digital pump apparatus, the pump width of each digital pump.

If printing is started and an actual printing sheet is obtained, then an actual color mixture halftone density for each of the ink supplying unit widths of the actual printing sheet is measured using an IRGB densitometer. Then, an actual halftone dot area ratio of each ink color corresponding to the actual color mixture halftone density is determined based on a corresponding relationship set in advance between halftone dot area ratios and color mixture halftone densities for each ink color. For the method of determining the actual halftone dot area ratio from the actual color mixture halftone density, a database wherein a relationship between halftone dot area ratios and color mixture halftone densities is stored may be used. For example, a database wherein data obtained by actual measurement, by means of an IRGB densitometer, of a printed matter printed in accordance with the JapanColor standards for Newspaper Printing established by the ISO/TC130 National Commission are stored, may be used. More simply, the database can be utilized also to utilize an approximate value calculated using the known Neugebauer expression. Further, also a target halftone dot area ratio for each ink color corresponding to the target color mixture halftone density is determined based on the corresponding relationship described above between halftone dot area ratios and color mixture halftone densities. Different from the actual halftone dot area ratio, the target halftone dot area ratio need not be calculated every time, but it is sufficient to determine the target halftone dot area ratio once unless the target color mixture halftone density varies. For example, the target halftone dot area ratio may be calculated at a point of time when the target color mixture halftone density is set.

Thereafter, an actual monochromatic halftone density corresponding to the actual halftone dot area ratio is determined based on a corresponding relationship set in advance between halftone dot area ratios and monochromatic halftone densities. As the method of calculating an actual monochromatic halftone density from an actual halftone dot area ratio, a map or a table which represents a relationship between monochromatic halftone densities and halftone dot area ratios may be prepared such that the actual halftone dot area ratio is applied to the map or the table. Meanwhile, also a target monochromatic halftone density corresponding to the target halftone dot area ratio is determined based on the corresponding relationship described above between halftone dot area ratios and monochromatic halftone densities. Different from the actual monochromatic halftone density, the target monochromatic halftone density need not be calculated every time, and it is sufficient to determine the target monochromatic halftone density once unless the target halftone dot area ratio varies. For example, the target monochromatic halftone density may be calculated at a point of time when the target halftone dot area ratio is set.

Then, based on a corresponding relationship set in advance among halftone dot area ratios, monochromatic halftone densities and solid densities, a solid density deviation corresponding to a deviation between the target monochromatic halftone density and the actual monochromatic halftone density under the target halftone dot area ratio is determined. As the method of calculating the solid density difference, a map or a table which represents the corresponding relationship described above may be prepared such that the target halftone dot area ratio, target monochromatic halftone density and actual monochromatic halftone density are applied to the map or table. More simply, the relationship may be approximated using the known Yule-Nielsen expression to determine the solid density deviation. Then, the ink supplying amount is adjusted for each of the ink supplying unit widths based on the calculated solid density deviation and the ink supplying amount for each color is controlled for each of the ink supplying unit widths. The adjustment amount of the ink supplying amount based on the solid density deviation can be determined simply using the known API (Auto Preset Inking) function which is hereinafter described in detail in connection with the preferred embodiments of the present invention.

In this manner, with the picture color tone controlling method for a printing press according to the present invention, since a positional displacement between a plate making picture position and an actual picture position is eliminated, not a spectrometer but an IRGB densitometer can be used to perform color tone control appropriately. Consequently, the cost required for the measuring means can be reduced, and the picture color tone controlling method can cope sufficiently with a high speed printing press such as a rotary press for newspapers.

Besides, since picture color tone control is performed after the positional displacement between the plate making picture position and the actual picture position is eliminated, the picture color tone control can be performed appropriately and the print quality can be enhanced with certainty. Further, since the elimination of the positional displacement is performed by movement of the plate making picture position of plate making data, it can be processed rapidly. Besides, the plate making data have a high resolution, and consequently, the moving process can be performed appropriately with a high degree of accuracy.

Particularly where a color mixture halftone density corresponding to an image line ratio for each ink supplying unit width for each ink color in the printing picture in the present cycle is determined based on a corresponding relationship between halftone dot area ratios and color mixture halftone densities for each ink color and then the color mixture halftone density corresponding to the image line ratio is set as a target color mixture halftone density, color tone control can be started at a point of time immediately after the operation is started. Consequently, paper loss can be reduced.

Particularly where the step of detecting a positional displacement, the step of moving the plate making picture position, the step of setting a target color mixture halftone density, the step of determining a target halftone dot area ratio, the step of determining a target monochromatic halftone density, the step executed before actual printing of measuring an actual color mixture halftone density, the step of determining an actual halftone dot area ratio, the step of determining an actual monochromatic halftone density, the step of determining a solid density deviation and the step of adjusting an ink supplying amount are executed in a period set in advance during actual printing, the picture color tone can always be controlled appropriately by feedback control during the actual printing.

Further, where the step of detecting a positional displacement is carried out in a period set in advance during the actual printing and, if the positional displacement amount reaches or exceeds a predetermined amount set in advance, the plate making picture position is re-moved so that the positional displacement may be eliminated, whereafter the step of setting a target color mixture halftone density is executed based on the re-moved position of the plate making picture, even if a positional displacement appears between the plate making picture position and the actual picture position, the positional displacement is corrected by the feedback control. Consequently, the picture color tone can always be controlled appropriately.

The picture color tone controlling method can be carried out by a picture color tone controlling apparatus having the following configuration.

The picture color tone controlling apparatus for a printing press of the present invention comprises, as components thereof, in addition to an ink supplying apparatus for supplying ink to each of regions divided in a printing widthwise direction and an IRGB densitometer (preferably, a line sensor type IRGB densitometer) disposed on a feeding line of an actual printing sheet obtained by printing, positional displacement detection means, picture position moving means, target color mixture halftone density setting means, color mixture halftone density measuring means, target halftone dot area ratio arithmetic operation means, actual halftone dot area ratio arithmetic operation means, target monochromatic halftone density arithmetic operation means, actual monochromatic halftone density arithmetic operation means, solid density difference arithmetic operation means, and ink supplying amount adjusting means.

Of the components mentioned, the positional displacement detection means, picture position moving means, target color mixture halftone density setting means, color mixture halftone density measuring means, target halftone dot area ratio arithmetic operation means, actual halftone dot area ratio arithmetic operation means, target monochromatic halftone density arithmetic operation means, actual monochromatic halftone density arithmetic operation means, solid density difference arithmetic operation means, and ink supplying amount adjusting means can be implemented as programmed functions of a computer.

The functions are described below. First, the positional displacement detection means has a function of detecting a positional displacement between a plate making picture position which is a position of a printing picture with respect to printing paper and which is obtained from plate making data and an actual picture position which is a position of a printing picture with respect to the printing paper obtained by detecting actual printing paper printed based on the plate making data by means of a sensor. The picture position moving means has a function of moving the plate making picture position so as to eliminate the detected positional displacement. The target color mixture halftone density setting means has a function of setting a target color mixture halftone density for each of ink supplying unit widths of the ink supplying apparatus when the printing picture is divided with the ink supplying unit width. The color mixture halftone density measuring means has a function of making use of the IRGB densitometer to measure an actual color mixture halftone density for each of the ink supplying unit widths of the actual printing sheet. The target halftone dot area ratio arithmetic operation means has a function of determining a target halftone dot area ratio of each ink color corresponding to the target color mixture halftone density based on a corresponding relationship (for example, the Neugebauer expression) set in advance between halftone dot area ratios and color mixture halftone densities. The actual halftone dot area ratio arithmetic operation means has a function of determining an actual halftone dot area ratio of each ink color corresponding to the actual color mixture halftone density based on the same corresponding relationship. The target monochromatic halftone density arithmetic operation means has a function of determining a target monochromatic halftone density corresponding to the target halftone dot area ratio based on a corresponding relationship set in advance between the halftone dot area ratios and monochromatic halftone densities. The actual monochromatic halftone density arithmetic operation means has a function of determining an actual monochromatic halftone density corresponding to the actual halftone dot area ratio based on the same corresponding relationship. The solid density difference arithmetic operation means has a function of determining, based on a corresponding relationship (for example, the Yule-Nielsen express) set in advance among the halftone dot area ratios, the monochromatic halftone densities and solid densities, a solid density deviation corresponding to a deviation between the target monochromatic halftone density and the actual monochromatic halftone density under the target halftone dot area ratio. The ink supplying amount adjusting means has a function of adjusting an ink supplying amount of the ink supplying apparatus for each of the ink supplying unit widths based on the solid density deviation, for example, in accordance with the API function. Preferably, the picture color tone controlling apparatus for a printing press further comprises a conversion table which defines the corresponding relationship among the halftone dot area ratios, color mixture halftone densities and color coordinate values in the IRGB densitometer, and the target halftone dot area ratio arithmetic operation means and the actual halftone dot area ratio arithmetic operation means are configured so as to arithmetically operate the target halftone dot area ratio or the actual halftone dot area ratio using the conversion table.

As one of methods of detecting such a positional displacement as described above, a method is available wherein picture matching between a plate making image in which a plate making picture position is taken and an actual machine image in which an actual picture position is taken is performed by an image process in which a pattern matching method is used to detect a positional displacement. In this instance, an IRGB densitometer can be used as a sensor for detecting the actual picture position.

Meanwhile, as another method of detecting such a positional displacement as described above, a method is available wherein a positional displacement between a plate making picture position and an actual picture position is detected from a displacement between a position of a register mark described in plate making data in advance with respect to printing paper and a position of the register mark with respect to actual printing paper obtained by detecting the printing paper printed based on the plate making data by means of a sensor. In this instance, preferably a camera for exclusive use is used as the sensor for detecting the actual picture position.

Further, the target color mixture halftone density is set in the following manner. First, kcmy halftone dot area ratio data (for example, image data for plating making or the like) of a printing object picture which can be acquired from plate making data are used to set a noticed image corresponding to each ink color for each ink supplying unit width from among pixels which form the printing obj ect picture. Then, the halftone dot area ratio of the noticed pixel is converted into a color mixture halftone density based on a corresponding relationship set in advance between halftone dot area ratios and color mixture halftone densities. Then, the color mixture halftone density of the noticed pixel is set as a target color mixture halftone density, and the actual color mixture halftone density of the set noticed pixel is measured. According to the setting method, since color development can be estimated in a unit of a pixel by utilizing the database of JapanColor or the like, color tone control can be performed for a particular noticed point of the picture at a point of time immediately after printing is started without waiting that an OK sheet is printed. It is to be noted that the kcmy halftone dot area ratio data may be bitmap data of the printing object picture (for example, data for 1 bit-Tiff plating making) . Or, CIP3 data corresponding to 50.8 dpi or equivalent resolution conversion data (data obtained by conversion of 1 bit-Tiff plate making data of 1,200 dpi or 2,400 dpi into 8 bit-Tiff data of 50 dpi) may be used alternatively. Or else, low resolution data corresponding to CIP3 data obtained by conversion of bitmap data may be used instead.

Furthermore, where also an ICC (International Color Consortium) profile can be acquired in addition to kcmy halftone dot area ratio data of a printing object picture, noticed pixels corresponding to the individual ink colors are set for each of the ink supplying unit widths from among the pixels which form the printing object picture, and the halftone dot area ratios of the noticed pixels are converted into color mixture halftone densities using the ICC profile and a device profile of the IRGB densitometer. Then, the color mixture halftone densities of the noticed pixels are set as the target color mixture halftone densities, and the actual color mixture halftone densities of the set noticed pixels are measured. By controlling the color tone based on the ICC profile obtained from a printing requesting source or the like in this manner, a printed matter of a color tone desired by the printing requesting source or the like can be obtained readily.

It is to be noted that, in order to convert the halftone dot area ratio of the noticed pixel into the color mixture halftone density, the halftone dot area ratio is converted once into a color coordinate value using the ICC profile, and then the color coordinate value is converted into the color mixture halftone density. However, since the color mixture halftone density is four-dimensional information while the color coordinate value is three-dimensional information, the color mixture halftone density corresponding to the color coordinate value is not determined uniquely. Therefore, the present invention provides a method of selecting, in such development from three-dimensional information to four-dimensional information, the most agreeable piece of the four-dimensional information from among a large number of pieces of the four-dimensional information which may make a candidate. First, it is presupposed that the device profile of the IRGB densitometer is a conversion table which defines a corresponding relationship among halftone dot area ratios, color mixture halftone densities and color coordinate values in the IRGB densitometer. Then, the ICC profile is used to convert the halftone dot area ratio of a noticed pixel into a color coordinate value and determine a plurality of color mixture halftone density candidates corresponding to the color coordinate value from within the conversion table and then convert the halftone dot area ratio of the noticed element into a color coordinate value using the conversion table. Then, the color difference between the two color coordinate values obtained by the conversion through the ICC profile and the conversion through the conversion table is determined, and the variation amount of the halftone dot area ratio corresponding to the color difference is arithmetically operated using mathematical means such as minimum approximation. Then, the determined variation amount is added to the halftone dot area ratio of the noticed pixel, and the resulting value is determined as a virtual halftone dot area ratio. Then, one of the color mixture density candidates which most corresponds to the virtual half tone dot area ratio is selected by referring to the conversion table, and the selected color mixture halftone density candidate is set as a color mixture halftone density of the noticed pixel. In this manner, according to the present method, a color mixture halftone density corresponding to a color coordinate value can be decided uniquely by utilizing the halftone dot area ratio corresponding to the color coordinate value.

More preferably, an actual color coordinate value corresponding to the actual color mixture halftone density of the noticed pixel measured by the IRGB densitometer and a target color coordinate value corresponding to the target color mixture halftone density are determined based on a corresponding relationship set in advance between color mixture halftone densities and color coordinate values. Then, a color difference between the actual color coordinate value and the target color coordinate value is determined, and the actual color coordinate value and/or the color difference are displayed on a display apparatus. According to the method, it can be recognized intuitively by the operator by which level colors coincide with each other.

As one of setting methods of a noticed point, a method is available wherein an image of a printing picture is displayed on a display apparatus such as a touch panel such that the operator may designate a noticed point arbitrarily. Preferably,apixelhavingamaximum density sensitivity, or a pixel having a maximum autocorrelation to the halftone dot area ratio, is automatically extracted for each ink color through arithmetic operation and is set as a noticed pixel. According to the method, where the color of a commodity with regard to which priority is to be given to the color tone in an ink supplying unit width or the image line ratio of a picture is low, further stabilized color tone control can be achieved.

More preferably, a pixel group including a designated or automatically extracted pixel and a plurality of surrounding pixels is set as a noticed pixel. In this instance, an average color mixture halftone density of the pixel group is set as the target color mixture halftone density, and the IRGB densitometer measures an actual average color mixture halftone density of the pixel group. The number of pixels to be included in the pixel group or the selection pattern of such pixels is determined so that the influence of disturbance is suppressed taking the position of the designated or automatically extracted pixel in the picture and so forth into consideration. According to the method, since the variation of measurement caused by meandering or lengthwise displacement of the printing paper surface decreases, stabilized feedback control can be anticipated.

The above and other objects, features and advantages of the present invention will become apparent from the following description and the appended claims, taken in conjunction with the accompanying drawings in which like parts or elements are denoted by like reference characters.

BRIEF DESCRIPTION OF THE DRAWINGS

FIG. 1 is a schematic view showing a general configuration of an offset rotary press for newspapers according to a first embodiment of the present invention;
FIG. 2 is a functional block diagram showing a color tone controlling function of an arithmetic operation section shown in FIG. 1;
FIG. 3 is a schematic diagrammatic view illustrating detection and elimination of a positional displacement according to the first embodiment of the present invention;
FIG. 4 is a flow chart illustrating a processing flow for color tone control by the arithmetic operation apparatus shown in FIG. 1;
FIG. 5 is a map for coordinating monochromatic halftone densities and halftone dot area ratios with each other;
FIG. 6 is a map for coordinating solid densities, halftone dot area ratios and monochromatic halftone densities with one another;
FIG. 7 is a flow chart illustrating a processing flow for color tone control according to a second embodiment of the present invention;
FIG. 8 is a flow chart illustrating a processing flow for color tone control according to a third embodiment of the present invention;
FIGS. 9(a), 9(b) and 9(c) are schematic views illustrating detection of a positional displacement according to a fourth embodiment of the present invention; and
FIG. 10 is a schematic diagrammatic view illustrating a subject to be solved by the present invention.

DESCRIPTION OF THE PREFERRED EMBODIMENTS

In the following, preferred embodiments of the present invention are described with reference to the accompanying drawings.

A. First Embodiment

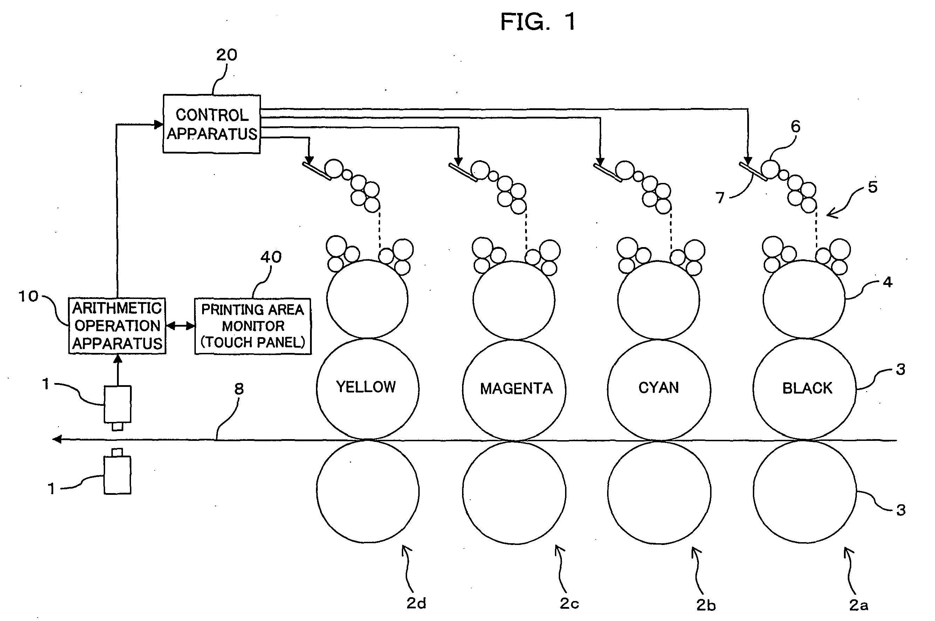

FIG. 1 shows a general configuration of an offset rotary press for newspapers according to a first embodiment of the present invention. The offset rotary press for newspapers of the present embodiment is a double-sided printing press for multi-color printing and includes printing units 2a, 2b, 2c and 2d disposed for different ink colors [black (k), cyan (c), magenta (m) and yellow (y) ] along a transport path of a printing sheet 8. In the present embodiment, each of the printing units 2a, 2b, 2c and 2d includes an ink supplying apparatus of the ink key type which includes a plurality of ink keys 7 and an ink fountain roller 6. In the ink supplying apparatus of the type described, the ink supplying amount

EP 1 629 978 A2

can be adjusted by the gap amount (the gap amount is hereinafter referred to as ink key opening) of each of the ink keys 7 from the ink fountain roller 6. The ink keys 7 are juxtaposed in the printing widthwise direction, and the ink supplying amount can be adjusted in a unit of the width of each of the ink keys 7 (the ink supplying unit width by each ink key 7 is hereinafter referred to as key zone). The ink whose supplying amount is adjusted by each ink key 7 is kneaded to a suitable degree to form a thin film in an ink roller group 5 and then supplied to a printing surface of a printing cylinder 4. Then, the ink sticking to the printing face is transferred as a picture to the printing sheet 8 through a blanket cylinder 3. It is to be noted that, though not shown in FIG. 1, since the offset rotary press for newspapers of the present embodiment is for double-sided printing, each of the printing units 2a, 2b, 2c and 2d includes a pair of blanket cylinders 3 disposed across the transport path of the printing sheet 8, and a printing cylinder 4 and an ink supplying apparatus are provided for each of the blanket cylinders 3.

The offset rotary press for newspapers includes a pair of line sensor type IRGB densitometers 1 on the further downstream of the most downstream printing units 2d. Each of the line sensor type IRGB densitometers 1 is a measuring instrument for measuring a color of a picture on the printing sheet 8 as reflection densities (color mixture halftone densities) of I (infrared radiation), R (red), G (green) and B (blue) on a line in the printing widthwise direction. The offset rotary press for newspapers can measure the reflection density over the overall printing sheet 8 or measure the reflection density at an arbitrary position of the printing sheet 8. Since the offset rotary press for newspapers is for double-sided printing, the line sensor type IRGB densitometers 1 are disposed on the opposite front and rear sides across the transport path of the printing sheet 8 so that they can measure the reflection density on the opposite front and rear faces of the printing sheet 8.

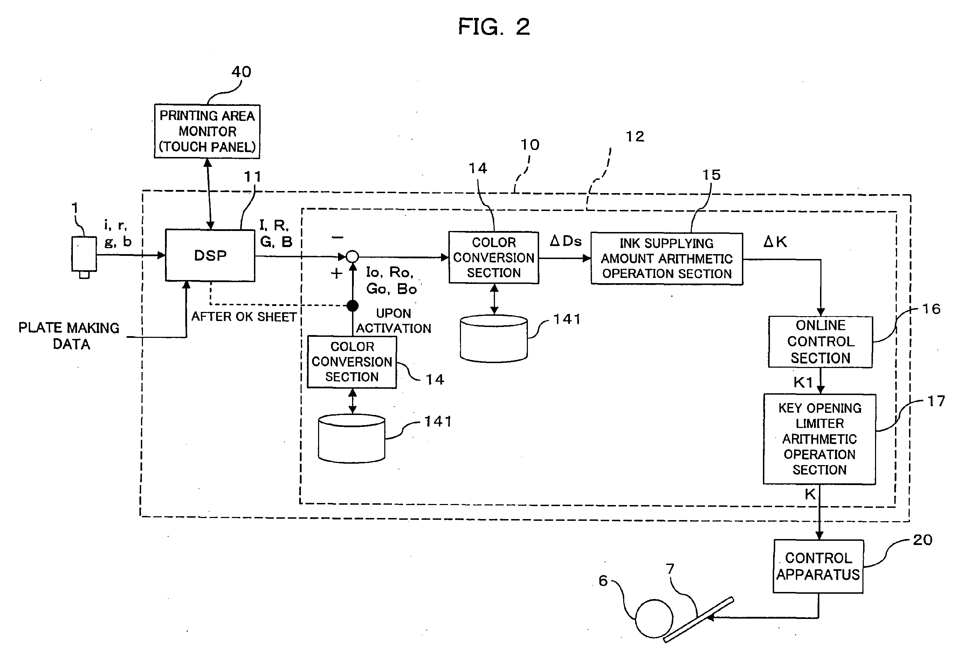

The reflection densities measured by the line sensor type IRGB densitometers 1 are transmitted to an arithmetic operation apparatus 10. The arithmetic operation apparatus 10 is an apparatus for arithmetically operating control data of the ink supplying amount, and performs arithmetic operation based on the reflection densities measured by the line sensor type IRGB densitometers 1 to arithmetically operate the opening of each of the ink keys 7 for making the color of the picture of the printing sheet 8 coincide with a target color. Here, FIG. 2 is a view showing a general configuration of a picture color tone controlling apparatus for the offset rotary press for newspapers according to the embodiment of the present invention and simultaneously is a functional block diagram showing the arithmetic operation apparatus 10 with attention paid to a color tone controlling function.

Referring to FIG. 2, the arithmetic operation apparatus 10 includes a digital signal processor (DSP) 11 and a personal computer (PC) 12 disposed separately from the printing press. The PC 12 has functions as a color conversion section 14, an ink supplying amount arithmetic operation section 15, an online control section 16 and a key opening limiter arithmetic operation section 17 allocated thereto. The line sensor type IRGB densitometers 1 are connected to the input side of the arithmetic operation apparatus 10, and a control apparatus 20 built in the printing press is connected to the output side of the arithmetic operation apparatus 10 . The control apparatus 20 functions as ink supplying amount adjusting means for adjusting the ink supplying amount for each of the key zones of the ink keys 7. The control apparatus 20 controls an opening/closing apparatus not shown for opening and closing each of the ink keys 7 and can adjust the key opening independently for each ink key 7 of each of the printing units 2a, 2b, 2c and 2d. Further, a display apparatus (printing area monitor) 40 for displaying a printing picture to be printed on paper is connected to the arithmetic operation apparatus 10, and the printing area monitor 40 has a function as a touch panel. The touch panel 40 can be used to display a printing surface of the printing sheet 8 whose image is picked up by the line sensor type IRGB densitometer 1 and select an arbitrary region on the printing surface with a finger.

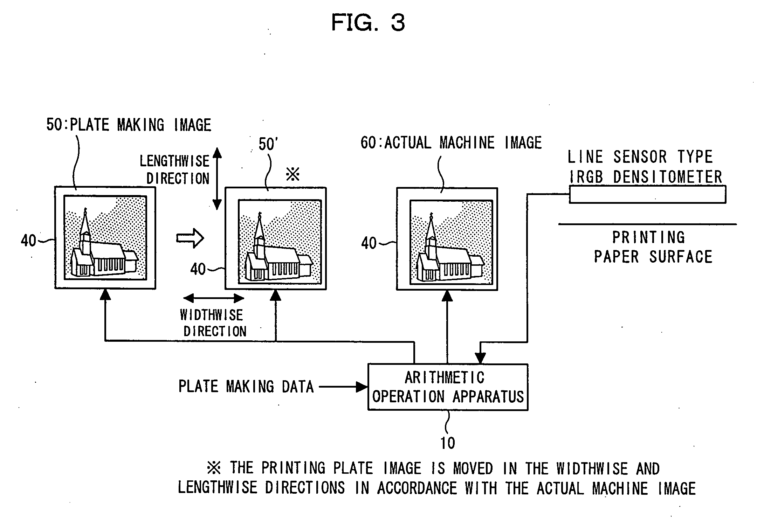

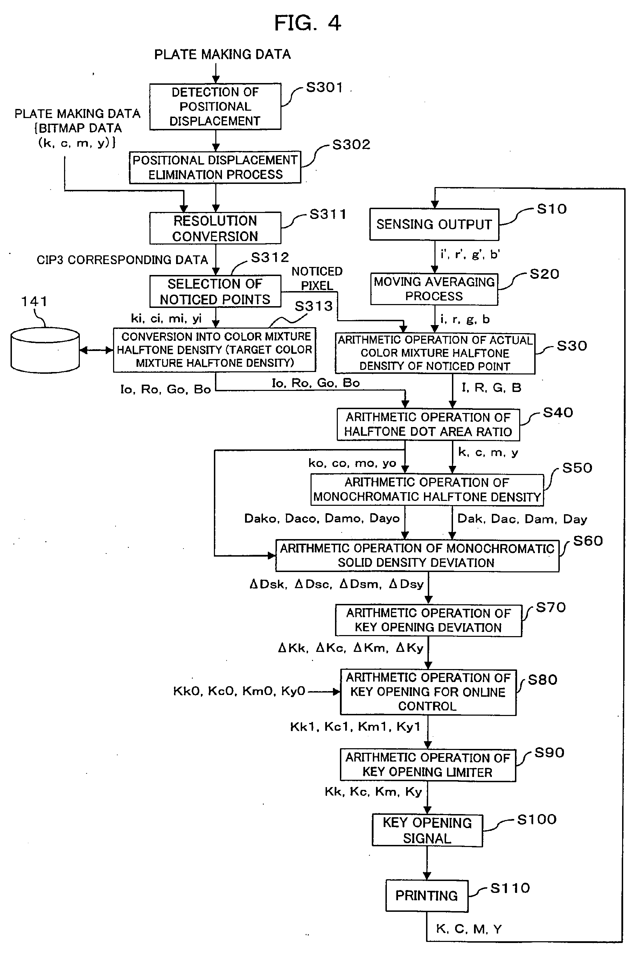

FIG. 3 is a view illustrating control for elimination of a positional displacement performed prior to color tone control, and FIG. 4 is a flow chart illustrating a processing flow of the color tone control.

In the following, contents of the processing of the color tone control by the arithmetic operation apparatus 10 are described principally with reference to FIGS. 3 and 4.

Referring first to FIG. 3, plate making data are inputted in advance to the arithmetic operation apparatus 10, and the arithmetic operation apparatus 10 detects the position of a printing picture (the position is hereinafter referred to as plate making picture position) with respect to the printing paper based on the plate making data (this function is included in positional displacement detection means). On the other hand, the printing press to which a printing plate produced based on the plate making data is activated to perform test printing, and the position of an actually printed picture (the position is hereinafter referred to as actual picture position) with respect to the printing paper is detected by the line sensor type IRGB densitometer (sensor) 1. It is to be noted that the plate making picture position can be displayed as a plate making image 50 and the actual picture position can be displayed as an actual machine image 60, for example, in such a manner as seen in FIG. 3 on the printing area monitor 40, and the arithmetic operation apparatus 10 calculates the positional displacement between the plate making picture position and the actual picture position (step S301 of FIG. 4). It is to be noted that this positional displacement is a displacement in the widthwise direction and the lengthwise direction of the printing paper.

In the present embodiment, the calculation of the positional displacement is performed by an image process using a known pattern matching method. According to the pattern matching method, a corresponding image (here, the plate making image 50) to a reference image (here, the plate making image 50) is compared in a row and a column of a plurality of pixels to select a characteristic point of the picture of the corresponding image corresponding to a characteristic point of the picture of the reference image. Then, the positional displacement on the coordinates between the two characteristic points is calculated to calculate the positional displacement of the corresponding image with respect to the printing paper.

After the arithmetic operation apparatus 10 calculates the positional displacement (displacement in the widthwise direction and the lengthwise direction of the printing paper) in this manner (this function is defined as positional displacement detection means), it moves the plate making picture position as indicated by reference character 50' in FIG. 3 so that the positional displacement may be eliminated (this function is defined as picture position moving means: step S302 of FIG. 4). The plate making data have a data format of bitmap data of the printing object picture (for example, 1 bit-Tiff plate making data) or CIP3 data corresponding to 50.8 dpi or equivalent resolution conversion data (data obtained by conversion of 1 bit-Tiff plate making data of 1,200 dpi or 2,400 dpi into 8 bit-Tiff data of 50 dpi). In order to move the plate making picture position, the position of each pixel of bitmap data should be moved by predetermined amounts in the widthwise direction and the lengthwise direction corresponding to the positional displacement, and this process is simple arithmetic operation and can be processed rapidly on a computer.

Besides, the plate making data are data of a high resolution, and the moving process can be performed appropriately with a high degree of accuracy using the plate making data. The moving process of the plate making data has various advantages when compared with an alternative process wherein the actual picture position is moved. In particular, although a possible method which can be applied for movement of the actual picture position is to move the line sensor type IRGB densitometer 1, if the line sensor type IRGB densitometer 1 is moved, then the sensor point position of the line sensor type IRGB densitometer 1 with respect to the paper surface suffers from some displacement, which deteriorates the detection accuracy as described hereinabove.

Further, an actual machine image obtained from detection data of the densitometer 1 is lower in resolution than that of a plate making image obtained fromplate making data, and even if it is tried to move the actual machine image of the lower resolution to make the actual machine image coincide with the position of the printing plate, the position of the actual machine image cannot be made coincide with the position of the plate making image with a high degree of accuracy. Further, in order for an actual machine image of a high resolution to be obtained from detection data of the densitometer 1, it is necessary to irradiate the printing plate with light which has a high intensity corresponding to the printing speed. However, there is a limitation to irradiation of light, and in a situation at present wherein the printing speed is very high, it is difficult to raise the detection resolution of the densitometer 1.

It is to be noted that, although a lower resolution of an actual machine image gives rise to deterioration of the detection accuracy by a positional displacement, if a great number of characteristic points to be noticed are set in a picture upon image processing, then the deterioration of the detection accuracy by the positional displacement can be suppressed to some degree. Particularly if deterioration of the detection accuracy of the densitometer 1 occurs when the densitometer 1 for obtaining actual machine image information is moved, then also the reliability of the actual machine image deteriorates in addition to the low resolution of the actual machine image. Therefore, where the plate making image is moved, the two images can be made coincide with each other with a higher degree of accuracy than where the actual machine image is moved.

After the process for positional displacement elimination is performed in this manner, a target color mixture halftone density for each ink supplying unit width when the printing picture is divided with the ink supplying unit width of the ink supplying apparatus is set based on the plate making picture information after the movement (this function is defined as target color mixture halftone density setting means) . The ink supplying unit width of the ink supplying apparatus is, where the ink supplying apparatus is an ink key apparatus, the key width (key zone) of each ink key, but is, where the ink supplying apparatus is a digital pump apparatus, the pump width of each digital pump.

Here, since plate making data [page information of a newspaper transmitted in the form of bitmap data (1 bit-Tiff plate making data) or CIP3 data corresponding to 50.8 dpi or equivalent resolution conversion data (data obtained by conversion of 1 bit-Tiff data of 1,200 dpi or 2,400 dpi into 8 bit-Tiff data of 50 dpi) from the head office of the newspaper company to the printing factory] are inputted (received by reception means), at step S311, the received bitmap data are converted into low resolution data corresponding to CIP3 data according to the format of the printing press, and the low resolution data are used as pixel area ratio data. Although the resolution conversion process just described is performed in order to achieve compatibility with popular CIP3 data, it is otherwise possible to use the bitmap data themselves as pixel area ratio data in a later process.

At step S312, a noticed point (noticed pixel) corresponding to each ink color is set for each ink supplying unit width (this function is defined as noticed pixel setting means). One of available setting methods of a noticed point is to display a picture image of a newspaper page on the touch panel 40 using the bitmap data received from the main office of the newspaper company such that an operator arbitrarily selects a particular position on the newspaper page displayed on the touch panel 40. Also another method is available wherein the autocorrelation regarding the halftone dot area ratio is arithmetically operated for each pixel for each color to automatically extract a pixel having a maximum autocorrelation and the extracted pixel is automatically set as a noticed point (noticed pixel). More particularly, for example, the autocorrelation sensitivity Hc of cyan can be represented, using pixel area ratio data (c, m, y, k), by "$Hc = c^2/(c + m + y + k)$", and a pixel having a maximum value of the autocorrelation sensitivity Hc is selected as a noticed point of cyan. Similarly, a pixel having the highest autocorrelation also for any other color is determined by arithmetic operation, and the pixel is set as a noticed point.

At step S313, a conversion table recorded in a database 141 is used to convert the halftone point area ratios ki, ci, mi, yi of the noticed points into color mixture halftone densities (this function is defined as conversion means), and the resulting color mixture halftone densities are set as target colormixture halftone densities Io, Ro, Co, Bo, respectively.

After the target color mixture halftone densities Io, Ro, Co, Bo are set in such a manner as described above, processes at steps beginning with step S10 are executed repetitively. First, at step S10, the line sensor type IRGB densitometer 1 measures the reflected light amounts i', r', g', b' of each of the pixels on the overall printing sheet 8. The reflected light amounts i', r', g', b' of the pixels measured by the IRGB densitometer 1 are inputted to the DSP 11.

The DSP 11 performs, at step S20, moving averaging in a unit of a predetermined number of prints with regard to the reflected light amounts i', r', g', b' of the pixels to calculate reflected light amounts i, r, g, b of the pixels from which noise components are removed.

Then at step S30, the DSP 11 uses the reflected light amounts i, r, g, b of the pixels arithmetically operated at step S20 to arithmetically operate actual color mixture halftone densities I, R, G, B of the noticed points (a function of performing the processes at steps S10 to S30 is defined as color mixture halftone density measuring means) . The DSP 11 is connected to the touch panel 40, and a picture image (plate making image) of the plate making data is displayed on the touch panel 40. A noticed point is designated by arbitrarily selecting a particular point on the plate making image displayed on the touch panel 40 and is inputted to the DSP 11 of the arithmetic operation apparatus 10. A noticed point is the position of the picture on the printing sheet 8 at which coincidence particularly in color should be obtained, and a particular one pixel or a plurality of adjacent pixels which form a mass are designated. For any key zone in which no noticed point is designated by the operator, the DSP 11 automatically sets a noticed point. This automatic setting is performed by automatically extracting, from within a distribution of the color mixture halftone density for each ink cooler over the overall plate making image, a pixel having the highest density sensitivity (pixel which exhibits the highest color development) for each color. For example, where a key zone picture is printed in four colors, four noticed points (target colors) of black, cyan, magenta and yellow are selected, and the four colors are controlled independently of each other in each key zone. Further, for example, a color which is not included in an arbitrary picture point designated by the operator or a color which has a small picture area may be set automatically.

The DSP 11 arithmetically operates target color mixture halftone densities Io, Ro, Co, Bo from the reflected light amounts i, r, g, b of the noticed points of the printing plate image and reflected light amounts of a blank portion of the printing plate image, and arithmetically operates actual color mixture halftone densities I, R, G, B from the reflected light amounts i, r, g, b of the noticed points and the reflected light amounts of the blank portion of the printing sheet (actually printed sheet) 8. It is to be noted that, where each noticed point is a set of a plurality of pixels, each of the reflected light amounts i, r, g, b is calculated by averaging among the plural pixels which form the noticed point. For example, where the reflected light amount of infrared radiation from a blank portion is represented by ip and the average reflected light amount of the infrared radiation within a key zone is represented by ik, the actual color mixture halftone density I of the infrared radiation is determined as $I = \log_{10}(ip/ik)$. The actual color mixture halftone densities I, R, G, B for each key zone determined by the DSP 11 are inputted to the color conversion section 14 of the PC 12.

The color conversion section 14 performs processes at steps S40, S50 and S60. First, at step S40, the color conversion section 14 arithmetically operates the halftone dot area ratios for the individual ink colors corresponding to the target color mixture halftone densities Io, Ro, Co, Bo set at step S0 and the actual color mixture halftone densities I, R, G, B arithmetically operated at step S30 (this function is defined as target halftone dot area ratio arithmetic operation means and actual halftone dot area ratio arithmetic operation means). In the arithmetic operation, the database 141 is used, and the halftone dot area ratios of the individual ink colors corresponding to the target color mixture halftone densities Io, Ro, Co, Bo are arithmetically operated as target halftone dot area ratios ko, co, mo, yo, and the halftone dot area ratios of the individual colors corresponding to the actual color mixture halftone densities I, R, G, B are arithmetically operated as actual halftone dot area ratios k, c, m, y.

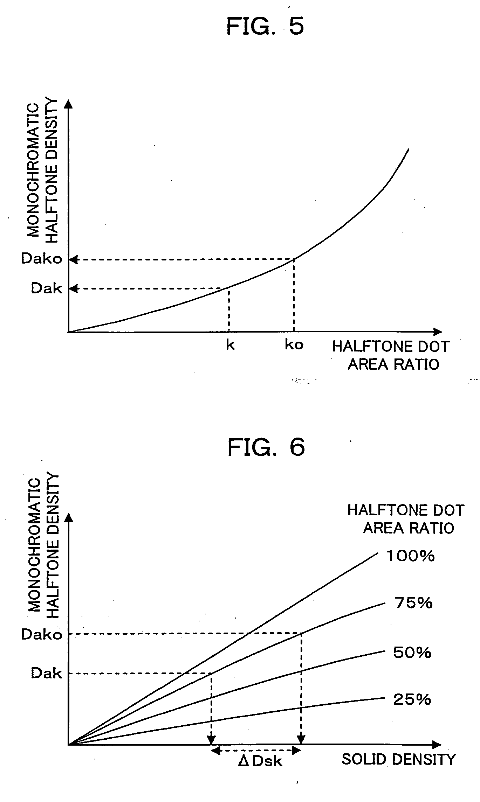

Thereafter, at step S50, the color conversion section 14 arithmetically operates monochromatic halftone densities of the individual colors corresponding to the target halftone dot area ratios ko, co, mo, yo and the actual halftone dot area ratios k, c, m, y (this function is defined as monochromatic halftone density arithmetic operation means). For this arithmetic operation, such a map as illustrated in FIG. 5 is used. FIG. 5 is an example of a map obtained by plotting the monochromatic halftone densities actually measured when the halftone dot area ratio is varied as a characteristic curve and produced from data measured in advance. In the example illustrated in FIG. 5, the target halftone dot area ratio ko and the actual halftone dot area ratio k of the black color are applied to the map to determine a target monochromatic halftone density Dako and an actual monochromatic halftone density Dak, respectively, from the characteristic curve in the map. The color conversion section 14 determines target monochromatic halftone densities Dako, Daco, Damo, Dayo and the actual monochromatic halftone densities Dak, Dac, Dam, Day of the individual ink colors in this manner.

Then, at step S60, the color conversion section 14 arithmetically operates solid density deviations ΔDsk, ΔDsc, ΔDsm, ΔDsy of the individual ink colors corresponding to the deviations between the target monochromatic halftone densities Dako, Daco, Damo, Dayo and the actual monochromatic halftone densities Dak, Dac, Dam, Day (this function is defined as solid density deviation arithmetic operation means). It is to be noted that the solid density relies also upon the halftone dot area ratio, and where the monochromatic halftone density is equal, the solid density decreases as the halftone dot area ratio increases. Therefore, the color conversion section 14 performs the arithmetic operation using such a map as illustrated in FIG. 6. FIG. 6 shows an example of a map obtained by plotting the monochromatic halftone densities actually measured when the monochromatic solid density is varied as a characteristic curve for different halftone dot area ratios, and is produced from data measured in advance. The color conversion section 14 selects one of the characteristic curves which correspond to the target halftone dot area ratios ko, co, mo, yo from within the map illustrated in FIG. 6 for each ink color, and applies the target monochromatic halftone densities Dako, Daco, Damo, Dayo and the actual monochromatic halftone densities Dak, Dac, Dam, Day to the selected characteristic curves to determine solid density deviations ΔDsk, ΔDsc, ΔDsm, ΔDsy. In the example illustrated in FIG. 6, where the target halftone dot area ratio ko of the black color is 75 %, the target monochromatic halftone density Dako and the actual monochromatic halftone density Dak are applied to the map to determine the solid density deviation ΔDsk of the black color from the 75 % characteristic curve in the map.

The solid density deviations ΔDsk, ΔDsc, ΔDsm, ΔDsy of the individual ink colors arithmetically operated by the color conversion section 14 are inputted to the ink supplying amount arithmetic operation section 15. At step S70, the ink supplying amount arithmetic operation section 15 arithmetically operates key opening deviation amounts ΔKk, ΔKc, ΔKm, ΔKy corresponding to the solid density deviations ΔDsk, ΔDsc, ΔDsm, ΔDsy, respectively. The key opening deviation amounts ΔKk, ΔKc, ΔKm, ΔKy are increasing or decreasing amounts from the key openings Kk0, Kc0, Km0, Ky0 at present (key openings Kk, Kc, Km, Ky outputted to the control apparatus 20 of the printing press by the process at step S100 in the preceding operation cycle) of the individual ink keys 7, and the ink supplying amount arithmetic operation section 15 performs the arithmetic operation using the known IPI function (auto-preset inking function). The API function is a function indicating a relationship between image line ratios A (Ak, Ac, Am, Ay) and the key openings K (Kk, Kc, Km, Ky) for each key zone to establish a reference density. The image line ratios A determined at step S0 may be used as such. More particularly, the ink supplying amount arithmetic operation section 15 determines the ratios kd (kd = ΔDs/Ds) of the solid density deviations ΔDs (ΔDsk, ΔDsc, ΔDsm, ΔDsy) to reference densities Ds (Dsk, Dsc, Dsm, Dsy) and the key opening K for obtaining a reference density with respect to each of the image line ratios A using the API function. Then, the ink supplying amount arithmetic operation section 15 determines the product of the image line ratios A and the key openings K to determine key opening deviation amounts ΔK (ΔK = kd × K) for reducing the solid density deviations ΔDs to zero.

Then, at step S80, the online control section 16 corrects the key opening deviation amounts ΔKk, ΔKc, ΔKm, ΔKy arithmetically operated by the color conversion section 14 taking the dead times from the printing units 2a, 2b, 2c and 2d to the line sensor type IRGB densitometer 1, reaction times of the ink keys 7 per unit time and the printing speed into consideration. In the correction, a time delay after a key opening signal is inputted until a corresponding ink key 7 moves to change the key opening thereby to change the ink amount to be supplied to the printing sheet and the variation of the ink amount appears as a variation of the reflected light amount on the line sensor type IRGB densitometer 1 is taken into consideration. For such an online feedback control system which involves considerable dead time as described above, for example, PI control with dead time compensation, fuzzy control or robust control is optically applied. The online control section 16 adds the key openings Kk0, Kc0, Km0, Ky0 at present to the key opening deviation amounts (online control key opening deviations) ΔKk, ΔKc, ΔKm, ΔKy to determine online control key openings Kk1, Kc1, Km1, Ky1 and inputs the determined online control key openings Kk1, Kc1, Km1, Ky1 to the key opening limiter arithmetic operation section 17.

At step S90, the key opening limiter arithmetic operation section 17 performs correction of restricting upper limit values to the online control key openings Kk1, Kc1, Km1, Ky1 arithmetically operated by the online control section 16. This is a process for restricting the key openings from increasing abnormally particularly arising from an estimated error of the color conversion algorithm (processes at steps S40, S50 and S60) in a low image line ratio region. Then at step S90, the key opening limiter arithmetic operation section 17 transmits the key openings Kk, Kc, Km, Ky whose upper limit values are restricted as key opening signals to the control apparatus 20 of the printing press.

At step S110, the control apparatus 20 adjusts the ink keys 7 of the printing units 2a, 2b, 2c and 2d based on the key openings Kk, Kc, Km, Ky received from the arithmetic operation apparatus 10 (the function of performing the processes at steps S70 to S110 is defined as ink supplying amount adjusting means). Consequently, the ink supplying amounts of the ink colors are controlled so as to conform to a target color tone for each key zone.

According to the color tone controlling method of the present embodiment, since picture color tone control is performed after a positional displacement between a plate making picture position and an actual picture position is eliminated, the picture color tone control can be performed appropriately and the printing quality can be enhanced with certainty. Particularly since the elimination of a positional displacement is performed by movement of the plate making picture position of plate making data, the elimination of a positional displacement can be performed rapidly. Besides, since the plate making data have a high resolution, the moving process can be performed appropriately with a high degree of accuracy.

Further, if the densitometer 1 is moved in order to move the actual picture position, then the sensor point position of the densitometer 1 with respect to the paper surface suffers from some displacement, which deteriorates the detection accuracy. Further, an actual machine image obtained from detection data of the densitometer 1 is lower in resolution than that of a plate making image obtained from plate making data, and even if it is tried to move the actual machine image of the lower resolution to make the actual machine image coincide with the position of the printing plate image, the position of the actual machine image cannot be made coincide with the position of the plate making image with a high degree of accuracy. However, since the plate making image obtained from the plate making data is moved, the positional displacement can be detected and eliminated accurately without suffering from such disadvantages as described above.

Further, since any positional displacement is corrected normally before printing is started, also a positional displacement which appears as time passes can be dealt with sufficiently.

It is to be noted that, even if a positional displacement appears between the plate making picture position and the actual picture position not only before actual printing is started but also while actual printing is proceeding, the positional displacement can be corrected by the feedback control, and the picture color tone can always be controlled appropriately. In this instance, the positional displacement is detected after every period of time set in advance while the actual printing is proceeding, and if the positional displacement amount reaches or exceeds a predetermined amount set in advance, then the plate making picture position is re-moved so as to eliminate the positional displacement. Then, the target mixture color halftone densities are set based on the plate making picture position after the re-movement.

Then, after actual printing is entered, it becomes possible immediately after starting of printing to perform color tone control accurately for particular noticed points of the picture without waiting that an OK sheet is printed. Accordingly, the period of time before an OK sheet is obtained can be further reduced thereby to reduce loss paper. Particularly where a pixel having a maximum autocorrelation with regard to the halftone dot area ratio of the pixels for each color is set as a noticed point, since the sensing sensitivity is enhanced, adjustment to a desired color tone can be performed rapidly.

It is to be noted that, at step S312, a pixel group including a plurality of pixels may be selected as a noticed point. For example, if an arbitrary pixel is selected by the operator or a pixel having a maximum autocorrelation sensitivity is automatically selected, then a pixel group including surrounding pixels is selected as a noticed point. The number of pixels or the selection pattern of such surrounding pixels to be included in the noticed point may be fixed (for example, surrounding 8 pixels which surround the selected or automatically extracted pixel) . Preferably, however, the surrounding pixels are set so that the influence of disturbance may be suppressed taking the position of the selected or automatically extracted pixel in the picture and so forth into consideration. Then, where a pixel group is selected as a noticed point, an average color mixture halftone density of the pixel group is set as a target color mixture halftone density at step S313, and an actual average color mixture halftone density is measured at step S30. According to the method just described, the variation of measurement data by meandering or lengthwise displacement of the printing paper surface is reduced, and consequently, stabilized feedback control can be anticipated.

B. Second Embodiment

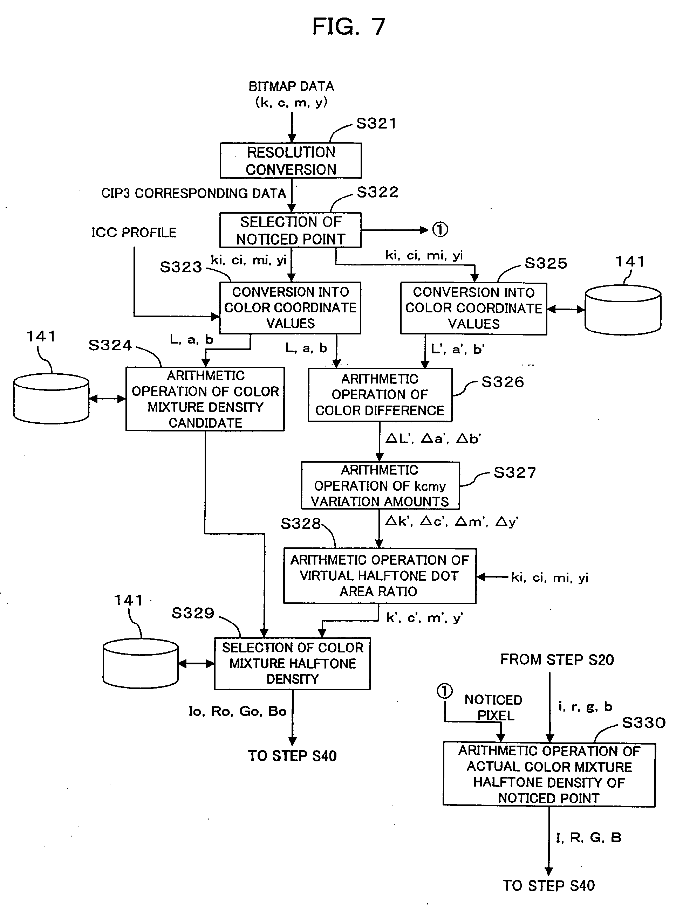

A second embodiment of the present invention is described with reference to FIG. 7. Also the present embodiment detects a positional displacement between a plate making picture position and an actual picture position and moves the plate making picture position so as to eliminate the positional displacement, similarly to the first embodiment.

It is assumed that, also in the present embodiment, printing data of page information for a newspaper transmitted in the form of bitmap data from the head office of a newspaper company to a printing factory are inputted similarly as in the first embodiment. However, in the present embodiment, as a first difference from the first embodiment, also an ICC profile of an inputting apparatus by which color information of the page has been produced is transmitted in addition to the bitmap data of the page information. At step S321, the bitmap data are converted into low resolution data corresponding to CIP3 data according to the format of the printing press, and at step S322, a noticed point corresponding to each ink color is set for each ink supplying unit width. The contents of the processes at steps S321 and S322 are similar to those at steps S311 and 312 according to the first embodiment, respectively, and therefore, overlapping description of them is omitted herein to avoid redundancy.

At step S323, the ICC profile received from the head office of the newspaper company is used to convert the halftone dot area ratios $k_i$, $c_i$, $m_i$, $y_i$ of the noticed points into a color coordinate value L, a, b. Then at step S324, a conversion table stored in the database 141 is used to convert the color coordinate value L, a, b determined at step S324 into a color mixture halftone density. However, since the color mixture halftone density is four-dimensional information while the color coordinate value is three-dimensional information, the color mixture halftone density corresponding to the color coordinate value is not determined uniquely. In order to determine the color mixture halftone density uniquely, some additional information is required. However, from the ICC profile, only three-dimensional information of the color coordinate value can be obtained.

Therefore, in the present embodiment, the halftone dot area ratio data of the printing picture, that is, the halftone dot area ratios ki, ci, mi, yi corresponding to the color coordinate value L, a, b, are utilized to select, in development from such three-dimensional information into four-dimensional information, the most appropriate pieces of four-dimensional information from among a large number of pieces of the four-dimensional information which are regarded as candidates.

First at step S325, the conversion table stored in the database 141 is used to convert the halftone dot area ratios ki, ci, mi, yi of the noticed points into color coordinate values L', a', b'. At step S326, color differences ΔL', Δa', Δb' between the color coordinate values L, a, b determined at step S323 and the color coordinate values L' , a', b' determined at step S325 are arithmetically operated. Then at step S327, variation amounts Δk' , Δc' , Δm' , Δy' of the halftone dot area ratios corresponding to the color differences ΔL', Δa', Δb', respectively, are arithmetically operated. The variation amounts of the halftone dot area ratios can be approximated by the following expressions using the variation amounts of the color coordinate values. It is to be noted that a and b in the following expressions are linear approximation coefficients.

$$\Delta c' \ = \ a11 \ \times \ \Delta L' \ + \ a12 \ \times \ \Delta a' \ + \ a13 \ \times \ \Delta b' \ + \ bc \ \cdots \ (1)$$

$$\Delta m' \ = \ a21 \ \times \ \Delta L' \ + \ a22 \ \times \ \Delta a' \ + \ a23 \ \times \ \Delta b' \ + \ bm \ \cdots \ (2)$$

$$\Delta y' \ = \ a31 \ \times \ \Delta L' \ + \ a32 \ \times \ \Delta a' \ + \ a33 \ \times \ \Delta b' \ + \ by \ \cdots \ (3)$$

$$\Delta k' \ = \ a41 \ \times \ \Delta L' \ + \ a42 \ \times \ \Delta a' \ + \ a43 \ \times \ \Delta b' \ + \ bk \ \cdots \ (4)$$

At step S328, the variation amounts Δk', Δc' , Δm', Δy' determined at step S327 are added to the halftone dot area ratios ki, ci, mi, yi of the noticed points, and the resulting values are set as virtual halftone dot area ratios k', c', m', y', respectively. At step S329, the virtual halftone dot area ratios k', c', m', y' are applied to the conversion table recorded in the database 141 to select, from among the color mixture halftone density candidates determined at step S324, those which correspond most to the virtual halftone dot area ratios k' , c' , m' , y'. The selected color mixture halftone densities are set as the target color mixture halftone densities Io, Ro, Go, Bo and are used in the processes at steps beginning with step S40 together with the actual color mixture halftone densities I, R, G, B of the noticed points arithmetically operated at step S330.

According to the present method, since an ICC profile obtained from a printing requesting source or the like can be used to control the color tone, the color tone can be adjusted accurately and easily to a color tone desired by the printing requesting source or the like when compared with alternative color adjustment which is performed through comparison with a proof-sheet as is performed conventionally. Accordingly, with the present method, the appearing amount of paper loss before an OK sheet is obtained can be reduced significantly.

Third Embodiment

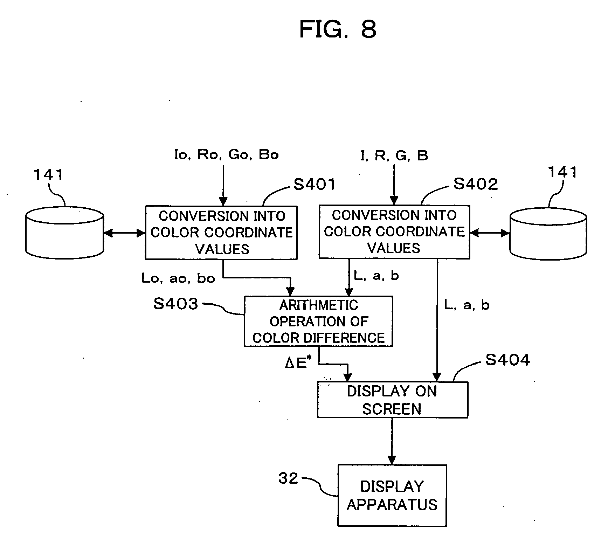

A third embodiment of the present invention is describedwith reference to FIG. 8. The present embodiment proposes an auxiliary method for color tone control and can be applied additionally to both of the color control methods of the first and second embodiments. It is to be noted that, in the present third embodiment, a positional displacement between the plate making picture position and the actual picture position is detected and the plate making picture position is moved so that the positional displacement may be eliminated, similarly as in the first embodiment.

At step S401, the conversion table recorded in the database 141 is used to convert the target color mixture halftone densities Io, Ro, Go, Bo into color coordinate values (target color coordinate values) (this function is defined as target color coordinate value arithmetic operation means) . At step S402, the conversion table is used similarly to convert the actual color mixture halftone densities I, R, G, B into color coordinate values (actual color coordinate values) (this function is defined as actualcolor coordinate value arithmetic operation means). Then at step S403, the color differences $\Delta E^*$ between the color coordinate values L, a, b determined at step S401 and the color coordinate values L, a, b determined at step S402 are arithmetically operated in accordance with

$$\Delta E^* = \sqrt{\{(Lo - L)^2 + (ao - a)^2 + (bo - b)^2\}}$$

(this function is defined as color difference arithmetic operation means). At step S404, the color coordinate values L, a, b and the color difference $\Delta E^*$ are displayed on a display apparatus 32 (this function is defined as display means).

Since the L*a*b* colorimetric system is a colorimetric system wherein the coordinates have a linear relationship to the color stimulus of the human being, where the color of a noticed point is represented by the color coordinate values L, a, b or the color difference $\Delta E^*$ of a noticed pixel from a target color is displayed as in the present method, it can be recognized intuitively by the operator by which level colors coincide with each other. Accordingly, by carrying out the present method additionally to the first and second embodiments, the present method can assist the decision of the operator to achieve more accurate color matching.

D. Fourth Embodiment

A fourth embodiment of the present invention is described with reference to FIGS. 9 (a) to 9(c). The present embodiment is different from the embodiments described above in the positional displacement detection technique for elimination of a positional displacement. While, in the first to third embodiments, a plate making image obtained from plate making data and an actual machine image obtained from detection information of the densitometer 1 to detect the positional displacement between the plate making picture position and the actual picture position, in the present embodiment, a register mark is used as seen in FIG. 9 (a) so that such positional relationship as described above can be detected with a higher degree of accuracy.

In particular, a register mark for positional displacement detection is written in advance at a position set in advance outside a printing image frame of printing plate data to produce a printing plate as seen in FIG. 9 (b) . Further, at a position set in advance of a printing press, which uses the printing plate to perform printing, for example, in the proximity of the densitometer 1, a camera 70 for picking up a spot-like image of the register mark and items in the proximity of the register mark is disposed as a sensor for detecting the register mark in the proximity of the printing surface as seen in FIG. 9(c). Further, the position M1 of the register mark (that is, a theoretical register mark position provided for the plate making image) which should originally be positioned can be grasped on the camera image. The position of the register mark of the printing plate data and the position of the camera 70 are set so that the register mark to be positioned should originally come to the center of the camera image.

Consequently, if an image of the printed paper surface is picked up by the camera 70, then the positional displacement between the position of the printed register mark M2 and the position of the register mark M1 at which it should originally be positioned can be detected without a complicated image process. Particularly since the camera 70 for exclusive use is used, the positional displacement can be detected with a higher degree of accuracy than where the densitometer 1 is used. Consequently, the positional displacement between the plate making picture position and the actual picture position can corrected accurately.

E. Others

While several preferred embodiments of the present invention have been described above, the embodiments of the present invention are not limited to those described above.

For example, while, in the first embodiment, the IRGB densitometer 1 is used to detect the actual picture position in order to detect the positional displacement between the plate making picture position and the actual picture position, a new sensor is not required, and this is advantageous in terms of the cost. However, it is a possible idea to use the camera used in the fourth embodiment to pick up an image of essential part of an actual picture to detect the actual picture position. In this instance, although the cost increases, the actual picture position can be detected with a high degree of accuracy without relying upon any register mark.

Further, the first embodiment may use, in addition to the method which uses the database 141 which coordinates halftone dot area ratios and color mixture halftone densities of the individual ink colors with each other, another method may be adopted wherein the known Neugebauer expression which defines a corresponding relationship between halftone dot area ratios and color mixture halftone densities of the individual ink colors is stored in advance and the halftone dot area ratio of each ink color is applied to calculate a color mixture halftone density.

Further, in addition to the method of determining the solid density deviations of the individual ink colors corresponding to the deviations between the target monochromatic halftone densities and the actual monochromatic halftone densities using such a map as illustrated in FIG. 6, also a method is available wherein the known Yule-Nielsen expression which defines a corresponding relationship among halftone dot area ratios, monochromatic halftone densities and solid densities is stored in advance, and a target halftone dot area ratio, an actual halftone dot area ratio and a monochromatic halftone density are applied to the expression to calculate the solid density deviation.

Further, while, in the embodiments, an IRGB densitometer of the line sensor type is used, alternatively an IRGB densitometer of the spot type may be used to scan the printing sheet two-dimensionally.

The present invention is not limited to the embodiment specifically described above, and variations and modifications can be made without departing from the scope of the present invention.

**Claims**

1. A picture color tone controlling method for a printing press, comprising:

   a step of detecting a positional displacement between a plate making picture position which is a position of a printing picture with respect to printing paper and is obtained from plate making data and an actual picture position which is a position of a printing picture with respect to the printing paper obtained by detecting actual printing paper printed based on the plate making data by means of a sensor;
   a step of moving the plate making picture position so as to eliminate the detected positional displacement;
   a step of setting a target color mixture halftone density for each of ink supplying unit widths of an ink supplying apparatus when the printing picture is divided with the ink supplying unit width based on the information of the moved plate making picture;
   a step of measuring an actual color mixture halftone density for each of the ink supplying unit widths of an actual printing sheet obtained by printing using an IRGB densitometer; and
   a color mixture halftone density adjusting step of adjusting an ink supplying amount for each of the ink supplying unit widths so that the actual color mixture halftone density approaches the target color mixture halftone density.

2. The picture color tone controlling method for a printing press as set forth in claim 1, wherein the color mixture halftone density adjusting step includes the steps of:

   determining a target halftone dot area ratio of each ink color corresponding to the target color mixture halftone density based on a corresponding relationship set in advance between halftone dot area ratios and color mixture halftone densities;
   determining an actual halftone dot area ratio of each ink color corresponding to the actual color mixture halftone density based on the corresponding relationship between the halftone dot area ratios and the color mixture halftone densities;
   determining a target monochromatic halftone density corresponding to the target halftone dot area ratio based on a corresponding relationship set in advance between the halftone dot area ratios and monochromatic halftone densities;
   determining an actual monochromatic halftone density corresponding to the actual halftone dot area ratio based on the corresponding relationship of the halftone dot area ratios and the monochromatic halftone densities;
   determining, based on a corresponding relationship set in advance among the halftone dot area ratios, the monochromatic halftone densities and solid densities, a solid density deviation corresponding to a deviation between the target monochromatic halftone density and the actual monochromatic halftone density under the target halftone dot area ratio; and
   adjusting an ink supplying amount for each of the ink supplying unit widths based on the solid density deviation.

3. The picture color tone controlling method for a printing press as set forth in claim 2, wherein the step of detecting a positional displacement, the step of moving the plate making picture position, the step of setting a target color mixture halftone density, the step of determining a target halftone dot area ratio, and the step of determining a target monochromatic halftone density are executed before the actual printing, and
   the step of measuring an actual color mixture halftone density, the step of determining an actual halftone dot area ratio, the step of determining an actual monochromatic halftone density, the step of determining a solid density deviation, and the step of adjusting an ink supplying amount of the solid density are executed in a cycle set in advance during actual printing.

4. The picture color tone controlling method for a printing press as set forth in claim 3, wherein, where the step of detecting a positional displacement is performed in the cycle set in advance during the actual printing until the positional displacement amount reaches a predetermined amount set in advance or more, the plate making picture position is moved again so that the positional displacement is eliminated, whereafter the step of setting a target color mixture halftone density is executed based on the plate making picture position moved again.

5. The picture color tone controlling method for a printing press as set forth in any one of claims 2 to 4, wherein, at the step of detecting a positional displacement, picture comparison is performed between a plate making image in which the plate making picture position is taken and an actual machine image in which the actual picture image is taken by means of an image process in which a pattern matching method is used to detect the positional displacement.

6. The picture color tone controlling method for a printing press as set forth in any one of claims 2 to 4, wherein the step of detecting a positional displacement detects the positional displacement from a positional displacement between a position of a register mark, written in advance in the plate making data, with respect to the printing paper and a position of a register mark, obtained by detecting actual printing paper printed based on the plate making data by means of a sensor, with respect to the printing paper.

7. The picture color tone controlling method for a printing press as set forth in any one of claims 1 to 5, wherein the step of setting a target color mixture halftone density includes the steps of:

acquiring kcmy halftone dot area ratio data of a printing object picture from the information of the moved plate making picture;
selecting a noticed pixel corresponding to each of the ink colors for each of the ink supplying unit widths from among pixels which form the printing object picture; and
converting a halftone dot area ratio of each of the noticed pixels into a color mixture halftone density based on a corresponding relationship set in advance between halftone dot area ratios and color mixture halftone densities;
the step of setting a target color mixture halftone density setting the color mixture halftone density of the noticed pixels as the target color mixture halftone density;
the step of measuring an actual color mixture halftone density measuring the actual color mixture halftone density of the noticed pixels.

8. The picture color tone controlling method for a printing press as set forth in any one of claims 2 to 6, wherein the step of setting a target color mixture halftone density includes the steps of:

acquiring kcmy halftone dot area ratio data of a printing object picture and an ICC profile from the information of the moved plate making picture;
selecting a noticed pixel corresponding to each of the individual ink colors for each of the ink supplying unit widths from among pixels which form the printing object picture; and
converting the halftone dot area ratio of the noticed pixels into the color mixture halftone density using the ICC profile and a device profile of the IRGB densitometer;
the step of setting a target color mixture halftone density setting the color mixture halftone density of the noticed pixels as the target color mixture halftone density;
the step of measuring an actual color mixture halftone density measuring the actual color mixture halftone density of the noticed pixels.

9. The picture color tone controlling method for a printing press as set forth in claim 8, wherein the device profile is a conversion table which defines a corresponding relationship among the halftone dot area ratios, color mixture halftone densities and color coordinate values, and
the step of converting the halftone dot area ratio of the noticed pixels into the color mixture halftone density includes the steps of:

converting the halftone dot area ratio of the noticed pixels into a color coordinate value using the ICC profile;
determining a plurality of candidates for the color mixture halftone density corresponding to the color coordinate values of the noticed pixels using the conversion table;
converting the halftone dot area ratios of the noticed pixels into color coordinate values using the conversion table;
determining a color difference between the two color coordinate values obtained by the conversion performed using the ICC profile and the conversion performed using the conversion table;
arithmetically operating an amount of variation of the halftone dot area ratio corresponding to the color difference;

adding the variation amount to the halftone dot area ratio of the noticed pixels to determine a virtual halftone dot area ratio; and

selecting a candidate corresponding best to the virtual halftone dot area ratio from among the plural candidates for the color mixture halftone density with reference to the conversion table;

the step of converting the halftone dot area ratio of the noticed pixels into the color mixture halftone density setting the selected candidate for the color mixture halftone density as the color mixture halftone density of the noticed pixels.

10. The picture color tone controlling method for a printing press as set forth in any one of claims 7 to 9, wherein the step of acquiring kcmy halftone dot area ratio data first acquires bitmap data of a printing obj ect picture and converts the bitmap data into low resolution data corresponding to CIP3 data, and then uses the converted data as the kcmy halftone dot area ratio data.

11. The picture color tone controlling method for a printing press as set forth in any one of claims 7 to 10, further comprising the steps of:

determining an actual color coordinate value corresponding to the actual color mixture halftone density of each of the noticed pixels measured by the IRGB densitometer based on a corresponding relationship set in advance between the color mixture halftone densities and color coordinate values;

determining a target color coordinate value corresponding to the target color mixture halftone density based on the corresponding relationship between the color mixture halftone densities and the color coordinate values;

determining a color difference between the actual color coordinate value and the target color coordinate value; and

displaying the actual color coordinate value and/or the color difference on a display apparatus.

12. The picture color tone controlling method for a printing press as set forth in any one of claims 7 to 11, wherein that pixel which has the highest autocorrelation with respect to the halftone dot area ratio for each of the ink colors is automatically extracted as the noticed pixel.

13. The picture color tone controlling method for a printing press as set forth in any one of claims 7 to 11, wherein a pixel group including that pixel which has the highest autocorrelation with respect to the halftone dot area ratio and a plurality of pixels around the pixel having the highest autocorrelation is automatically extracted for each of the ink colors as the noticed pixels,

the step of setting a target color mixture halftone density setting an average color mixture halftone density of the pixel group as the target color mixture halftone density,

the step of measuring an actual color mixture halftone density measuring an actual average color mixture halftone density of the pixel group.

14. A picture color tone controlling apparatus for a printing press, comprising:

positional displacement detection means for detecting a positional displacement between a plate making picture position which is a position of a printing picture with respect to printing paper and which is obtained from plate making data and an actual picture position which is a position of a printing picture with respect to the printing paper obtained by detecting actual printing paper printed based on the plate making data by means of a sensor;

picture position moving means for moving the plate making picture position so as to eliminate the detected positional displacement;

an ink supplying apparatus (6, 7) for supplying ink to each of regions divided in a printing widthwise direction;

target color mixture halftone density setting means for setting a target color mixture halftone density for each of ink supplying unit widths of said ink supplying apparatus (6, 7) when the printing picture is divided with the ink supplying unit width based on the information of the moved plate making picture;

an IRGB densitometer (1) disposed on a feeding line of an actual printing sheet obtained by printing;

color mixture halftone density measuring means for operating said IRGB densitometer (1) to measure an actual colormixture halftone density for each of the ink supplying unit widths of the actual printing sheet;

target halftone dot area ratio arithmetic operation means for arithmetically operating a target halftone dot area ratio of each ink color corresponding to the target color mixture halftone density based on a corresponding relationship set in advance between halftone dot area ratios and color mixture halftone densities;

actual halftone dot area ratio arithmetic operation means for arithmetically operating an actual halftone dot area ratio of each ink color corresponding to the actual color mixture halftone density based on the corresponding relationship between the halftone dot area ratios and the color mixture halftone densities;
target monochromatic halftone density arithmetic operation means for determining a target monochromatic halftone density corresponding to the target halftone dot area ratio based on a corresponding relationship set in advance between the halftone dot area ratios and monochromatic halftone densities;
actual monochromatic halftone density arithmetic operation means for determining an actual monochromatic halftone density corresponding to the actual halftone dot area ratio based on the corresponding relationship of the halftone dot area ratios and monochromatic halftone densities;
solid density difference arithmetic operation means for determining, based on a corresponding relationship set in advance among the halftone dot area ratios, the monochromatic halftone densities and solid densities, a solid density deviation corresponding to a deviation between the target monochromatic halftone density and the actual monochromatic halftone density under the target halftone dot area ratio; and
ink supplying amount adjusting means for adjusting an ink supplying amount for each of the ink supplying unit widths based on the solid density deviation.

15. The picture color tone controlling apparatus for a printing press as set forth in claim 14, wherein the sensor is said IRGB densitometer (1) .

16. The picture color tone controlling apparatus for a printing press as set forth in claim 14, wherein the sensor is a camera (70) for picking up an image of the printing paper.

17. The picture color tone controlling apparatus for a printing press as set forth in any one of claims 14 to 16, further comprising a conversion table which defines the corresponding relationship among the halftone dot area ratios, color mixture halftone densities and color coordinate values in said IRGB densitometer (1);
said target halftone dot area ratio arithmetic operation means and said actual halftone dot area ratio arithmetic operation means arithmetically operating the target halftone dot area ratio or the actual halftone dot area ratio using said conversion table.

18. The picture color tone controlling apparatus for a printing press as set forth in claim 17, wherein said target color mixture halftone dot halftone density setting means includes:

reception means for receiving kcmy halftone dot area ratio data of a printing obj ect picture from the information of the moved plate making picture;
noticed pixel setting means for individually setting the noticed pixels corresponding to the individual ink colors for each of the ink supplying unit widths from among the pixels which form the printing object picture; and
conversion means for converting the halftone dot area ratio of the noticed pixels into the color mixture halftone density using said conversion table;
said target color mixture halftone density setting means setting the color mixture halftone density of the noticed pixels as the target color mixture halftone density;
said color mixture halftone density measuring means measuring the actual color mixture halftone density of the noticed pixels.

19. The picture color tone controlling apparatus for a printing press as set forth in claim 17, wherein said target color mixture halftone dot halftone density setting means includes:

reception means for receiving kcmy halftone dot area ratio data of a printing object picture and an ICC profile from the information of the moved plate making picture;
noticed pixel setting means for individually setting the noticed pixels corresponding to the individual ink colors for each of the ink supplying unit widths from among the pixels which form the printing object picture; and
conversion means for converting the halftone dot area ratio of the noticed pixels into the color mixture halftone density using the ICC profile and said conversion table;
said target color mixture halftone density setting means setting the color mixture halftone density of the noticed pixels as the target color mixture halftone density;
said color mixture halftone density measuring means measuring the actual color mixture halftone density of the noticed pixels.

20. The picture color tone controlling apparatus for a printing press as set forth in any one of claims 15 to 19, further comprising:

actual color coordinate value arithmetic operation means for determining an actual color coordinate value corresponding to the actual color mixture halftone density using said conversion table;

target color coordinate value arithmetic operation means for determining a target color coordinate value corresponding to the target color mixture halftone density using said conversion table;

color difference arithmetic operation means for determining a color difference between the actual color coordinate value and the target color coordinate value; and

displaying means for displaying the actual color coordinate value and/or the color difference on a display apparatus.

# FIG. 1

EP 1 629 978 A2

# FIG. 2

PRINTING AREA MONITOR (TOUCH PANEL) — 40

1 — i, r, g, b

DSP — 11

I, R, G, B

PLATE MAKING DATA

AFTER OK SHEET

UPON ACTIVATION

Io, Ro, Go, Bo

COLOR CONVERSION SECTION — 14 — 141

COLOR CONVERSION SECTION — 14 — 141

ΔDs

INK SUPPLYING AMOUNT ARITHMETIC OPERATION SECTION — 15

ΔK

ONLINE CONTROL SECTION — 16

K1

KEY OPENING LIMITER ARITHMETIC OPERATION SECTION — 17

K

CONTROL APPARATUS — 20

6    7

10    12

# FIG. 3

50:PLATE MAKING IMAGE

LENGTHWISE DIRECTION

50'

※

40

40

WIDTHWISE DIRECTION

60:ACTUAL MACHINE IMAGE

40

LINE SENSOR TYPE IRGB DENSITOMETER

PRINTING PAPER SURFACE

PLATE MAKING DATA → ARITHMETIC OPERATION APPARATUS

10

※ THE PRINTING PLATE IMAGE IS MOVED IN THE WIDTHWISE AND LENGTHWISE DIRECTIONS IN ACCORDANCE WITH THE ACTUAL MACHINE IMAGE

EP 1 629 978 A2

# FIG. 4

PLATE MAKING DATA

DETECTION OF
POSITIONAL
DISPLACEMENT — S301

PLATE MAKING DATA
[BITMAP DATA
(k, c, m, y)]

POSITIONAL DISPLACEMENT
ELIMINATION PROCESS — S302

RESOLUTION
CONVERSION — S311

SENSING OUTPUT — S10

CIP3 CORRESPONDING DATA — S312

i', r', g', b'

SELECTION OF
NOTICED POINTS
NOTICED
PIXEL

MOVING AVERAGING
PROCESS — S20

S313

ki, ci, mi, yi

i, r, g, b

141

CONVERSION INTO COLOR MIXTURE
HALFTONE DENSITY (TARGET COLOR
MIXTURE HALFTONE DENSITY)

ARITHMETIC OPERATION OF ACTUAL
COLOR MIXTURE HALFTONE
DENSITY OF NOTICED POINT — S30

Io, Ro, Go, Bo

Io, Ro, Go, Bo

I, R, G, B

ARITHMETIC OPERATION OF
HALFTONE DOT AREA RATIO — S40

k, c, m, y

ko, co, mo, yo

ARITHMETIC OPERATION OF
MONOCHROMATIC HALFTONE DENSITY — S50

Dako, Daco, Damo, Dayo

Dak, Dac, Dam, Day

ARITHMETIC OPERATION OF MONOCHROMATIC
SOLID DENSITY DEVIATION — S60

ΔDsk, ΔDsc, ΔDsm, ΔDsy

ARITHMETIC OPERATION OF
KEY OPENING DEVIATION — S70

ΔKk, ΔKc, ΔKm, ΔKy

Kk0, Kc0, Km0, Ky0 →

ARITHMETIC OPERATION OF
KEY OPENING FOR ONLINE
CONTROL — S80

Kk1, Kc1, Km1, Ky1

ARITHMETIC OPERATION OF
KEY OPENING LIMITER — S90

Kk, Kc, Km, Ky

KEY OPENING
SIGNAL — S100

PRINTING — S110

K, C, M, Y

24

# FIG. 5

# FIG. 6

# FIG. 7

BITMAP DATA
(k, c, m, y)

S321

RESOLUTION
CONVERSION

CIP3 CORRESPONDING DATA

S322

SELECTION OF
NOTICED POINT → ①

ICC PROFILE

ki, ci, mi, yi          ki, ci, mi, yi          S325          141

S323

CONVERSION INTO
COLOR COORDINATE
VALUES

CONVERSION INTO
COLOR COORDINATE
VALUES

141          S324

L, a, b          L, a, b          L', a', b'

ARITHMETIC
OPERATION OF COLOR
MIXTURE DENSITY
CANDIDATE

ARITHMETIC
OPERATION OF
COLOR DIFFERENCE          S326

△L', △a', △b'

ARITHMETIC
OPERATION OF kcmy
VARIATION AMOUNTS          S327

S328          △k', △c', △m', △y'

ARITHMETIC OPERATION OF
VIRTUAL HALFTONE DOT
AREA RATIO          ki, ci, mi, yi

141          S329          k', c', m', y'

SELECTION OF COLOR
MIXTURE HALFTONE
DENSITY

FROM STEP S20

① NOTICED
PIXEL          i, r, g, b

Io, Ro, Go, Bo          S330

TO STEP S40          ARITHMETIC OPERATION OF
ACTUAL COLOR MIXTURE
HALFTONE DENSITY OF
NOTICED POINT

I, R, G, B

TO STEP S40

# FIG. 8

Io, Ro, Go, Bo        I, R, G, B

141

S401

CONVERSION INTO
COLOR COORDINATE
VALUES

S402

CONVERSION INTO
COLOR COORDINATE
VALUES

141

Lo, ao, bo     L, a, b

S403 — ARITHMETIC
OPERATION OF
COLOR DIFFERENCE

L, a, b

$\Delta E^*$

S404

DISPLAY ON
SCREEN

32 — DISPLAY
APPARATUS

## FIG. 9(a)

FIELD OF VIEW OF CAMERA

M2:REGISTER MARK POSITION OF ACTUAL MACHINE IMAGE

M1:REGISTER MARK POSITION WHICH COINCIDES IN POSITION WITH PLATE MAKING IMAGE

## FIG. 9(b)

60

M2:REGISTER MARK

## FIG. 9(c)

70:CAMERA

PRINTING PAPER FACE

## FIG. 10

50:PLATE MAKING IMAGE

60:ACTUAL MACHINE IMAGE

LINE SENSOR TYPE IRGB DENSITOMETER

LENGTHWISE DIRECTION

PRINTING PAPER FACE

40

40

WIDTHWISE DIRECTION

PLATE MAKING DATA → ARITHMETIC OPERATION APPARATUS ← ROTARY ENCODER DATA

10